# EUROPEAN PATENT APPLICATION

(11) **EP 2 180 754 A1**
(43) Date of publication of application: **28.04.2010**
(21) Application number: 08827268.7
(22) Date of filing: 06.08.2008
(51) Int. Cl.: H04W 84/00, H04W 4/00

(54) **BASE STATION APPARATUS AND TRANSMISSION CONTROL METHOD**

(30) Priority: 14.08.2007 JP 2007211587
(71) Applicant: NTT DoCoMo, Inc., Chiyoda-ku Tokyo 100-6150 (JP)
(72) Inventor: ISHII, Hiroyuki, Tokyo 100-6150 (JP)
(74) Representative: HOFFMANN EITLE
(86) International application number: PCT/JP2008/064132
(87) International publication number: WO 2009/022605

(57) **Abstract**

A base station apparatus for communicating with a mobile station includes an out-of-synchronization determining unit configured to determine out-of-synchronization with the mobile station in downlink based on an uplink signal transmitted from the mobile station.

## Description

### TECHNICAL FIELD

The present invention relates to a mobile communication system and specifically relates to a base station apparatus and a transmission control method.

### BACKGROUND ART

As a next-generation system of the W-CDMA (Wideband Code Division Multiple Access) system and the HSDPA (High Speed Downlink Packet Access) system, an LTE (Long Term Evolution) system has been studied by 3GPP (3rd Generation Partnership Project) which is a standards body of W-CDMA. In the LTE system, as a radio access system, an OFDMA (Orthogonal Frequency Division Multiplexing Access) scheme and an SC-FDMA (Single-Carrier Frequency Division Multiple Access) scheme have been studied to be applied to downlink communications and uplink communications, respectively (see, 3GPP TR 25.814 (V7.0.0), "Physical Layer Aspects for Evolved UTRA", June 2006, for example).

The OFDMA scheme is a transmission scheme in which a frequency band is divided into plural sub-carriers having narrower frequency bands and data are transmitted on the respective sub-carriers. The sub-carriers are closely arranged in the frequency direction, allowing the sub-carriers to be partly overlapped without causing interference, so that fast data transmission can be achieved and frequency usage efficiency can be improved.

The SC-FDMA scheme is a transmission scheme in which a frequency band is divided so that different frequencies can be separately used among plural terminals (user equipment terminals) and as a result, interference between terminals can be reduced. Further, in the SC-FDMA scheme, fluctuations in transmission power can be made smaller; therefore lower energy consumption of terminals can be achieved and a wider coverage area can be obtained.

In the WCDMA system, two criteria of out-of-synchronization determination (or detection) in downlink are defined (see 3GPP TS 25.214 (V7.2.0), "4.3.1.3 Uplink Synchronization primitives", Sept. 2006, for example):
- reception quality of a DPCCH (Dedicated Physical Control Channel) or DPCCH quality; and
- CRC (Cyclic Redundancy Check) result.

The DPCCH quality corresponds to reception quality (for example, SIR (signal-to-interference power ratio) or reception level) of pilot symbols or TPC (transmission power control) bits. The CRC result corresponds to a block error rate.

The WCDMA system uses a communication channel (dedicated channel) which is established between a base station apparatus and a mobile station on one-to-one basis. Typically, the DPCCH is transmitted at every slot. Accordingly, the synchronization determination as described above can be made using the DPCCH transmitted at every slot.

In addition, the DPCCH includes TPC bits for uplink transmission power control. When the TPC bits are in error, there is a problem in that uplink transmission power cannot be suitably controlled. For example, when uplink transmission power is higher than necessary, the uplink transmission power may result in an interference signal for uplink signals transmitted from other mobile stations. As a result, the efficiency of the system may be reduced. Accordingly, out-of-synchronization in downlink is determined based on reception quality of the TPC bits or dedicated pilot symbols which are comparable to the TPC bits. When out-of-synchronization is detected, uplink transmission is suspended.

### DISCLOSURE OF INVENTION

### [PROBLEM(S) TO BE SOLVED BY THE INVENTION]

However, the related art has the following problems.

The LTE system uses shared channels for both uplink and downlink and does not use a dedicated channel which is established between the base station apparatus and the mobile station on one-to-one basis. Accordingly, out-of-synchronization determination cannot be made using the DPCCH.

In addition, in the LTE, the base station apparatus determines which mobile station should communicate using uplink and downlink shared channels at a certain subframe. Thus, the base station apparatus needs to determine the synchronization status between the base station apparatus and the mobile station. For example, even if the base station apparatus assigns an uplink or downlink shared channel to the mobile station with the out-of-synchronization status in downlink, signals cannot be actually delivered. As a result, radio resources may be wasted.

In view of these problems, it is an object of the present invention to provide a base station apparatus and a transmission control method in which a synchronization status of each mobile station in downlink can be determined.

It is another object of the present invention to provide a base station apparatus which can improve an uplink or downlink transmission property or capacity by performing scheduling in uplink or downlink based on the determination result of the synchronization status of each mobile station in downlink.

### [MEANS FOR SOLVING THE PROBLEM(S)]

In one aspect of the present invention, there is provided a base station apparatus for communicating with a mobile station, including:
an out-of-synchronization determining unit configured to determine out-of-synchronization with the mobile station in downlink based on an uplink signal transmitted from the mobile station.

In another aspect of the present invention, there is provided a base station apparatus for communicating with a mobile station, including:
an instructing unit configured to instruct the mobile station using a downlink signal to transmit an uplink signal; and
an out-of-synchronization determining unit configured to determine out-of-synchronization with the mobile station in downlink based on whether the uplink signal to be transmitted from the mobile station has been transmitted.

In another aspect of the present invention, there is provided a base station apparatus for communicating with a mobile station, including:
an out-of-synchronization determining unit configured to determine out-of-synchronization with the mobile station in downlink based on the number of retransmissions of a downlink signal.

In another aspect of the present invention, there is provided a base station apparatus for communicating with plural mobile stations, including:
an allocating unit configured to allocate no uplink resource and/or no downlink resource to a mobile station with an out-of-synchronization status in downlink based on the detected out-of-synchronization status in downlink.

In another aspect of the present invention, there is provided a base station apparatus for communicating with plural mobile stations, including:
a disconnecting unit configured to disconnect communications with a mobile station with an out-of-synchronization status in downlink based on the detected out-of-synchronization status in downlink.

In another aspect of the present invention, there is provided a base station apparatus for communicating with a mobile station, including:
a synchronization establishment determining unit configured to determine, based on at least one of radio quality information for a downlink signal transmitted at a start of communications and acknowledge information in response to the downlink signal, that synchronization with the mobile station in downlink is established.

In another aspect of the present invention, there is provided a base station apparatus for communicating with a mobile station, including:
an RA response transmitting unit configured to transmit an RA response in a random access procedure;
a receiving unit configured to receive a UL-SCH corresponding to a UL Scheduling Grant included in the RA response; and
a synchronization status determining unit configured to determine a synchronization status in uplink or downlink; wherein
the synchronization status determining unit determines that synchronization in uplink or downlink is established when a decoding result of the UL-SCH is OK, and that synchronization in uplink or downlink is not established when a decoding result of the UL-SCH after HARQ retransmission is NG.

In another aspect of the present invention, there is provided a transmission control method in a base station apparatus for communicating with a mobile station, including the steps of:
transmitting a downlink signal to the mobile station; and
determining out-of-synchronization with the mobile station in downlink based on information included in an uplink signal which is transmitted from the mobile station in response to the downlink signal.

### [ADVANTAGEOUS EFFECT OF THE INVENTION]

According to an embodiment of the present invention, a base station apparatus can keep track of a synchronization status in downlink. Thus, the base station apparatus and a transmission control method can improve an uplink or downlink transmission property or capacity by performing scheduling based on the synchronization status in downlink.

### BRIEF DESCRIPTION OF THE DRAWINGS

Fig. 1 shows a block diagram illustrating a configuration of a radio communication system according to an embodiment of the present invention.
Fig. 2 shows an example of uplink control channel mapping.
Fig. 3 shows a partial block diagram illustrating a base station apparatus according to an embodiment of the present invention.
Fig. 4 shows a partial block diagram illustrating a baseband signal processing unit in a base station apparatus according to an embodiment of the present invention.
Fig. 5 shows a flowchart of a method of detecting out-of-synchronization in downlink according to an embodiment of the present invention.
Fig. 6 shows a flowchart of a scheduling method according to an embodiment of the present invention.
Fig.7 shows a flowchart of a transmission control method in a base station apparatus according to an embodiment of the present invention.

### DETAILED DESCRIPTION OF THE PREFERRED EMBODIMENTS

### [DESCRIPTION OF NOTATIONS]

- 50: cell
- 100₁,100₂, 100₃, 100ₙ: user equipment
- terminal (mobile: station)
- 200: base station apparatus
- 202: transceiving antenna
- 204: amplification unit
- 206: transceiving unit
- 208: baseband signal processing unit
- 2081: Layer-1 processing unit
- 20811: reception processing unit
- 20812: transmission processing unit
- 20813: uplink CQI demodulation processing unit
- 20814: uplink ACK information demodulation processing unit
- 20815: uplink UL-SCH demodulation processing unit
- 20816: uplink Sounding RS demodulation processing unit
- 20817: downlink modulation processing unit
- 2082: MAC processing unit
- 2083: RLC processing unit
- 2084: out-of-synchronization determining unit
- 210: call processing unit
- 212: transmission path interface
- 300: access gateway apparatus
- 400: core network
- 500: physical uplink shared channel
- 510: uplink control channel
- 520: uplink control channel

### [BEST MODE OF CARRYING OUT THE INVENTION]

A best mode for carrying out the present invention is described below with reference to the accompanying drawings. Throughout the figures for illustrating the embodiments of the present invention, the same reference numerals are used for the same or equivalent elements and their repeated descriptions may be omitted.

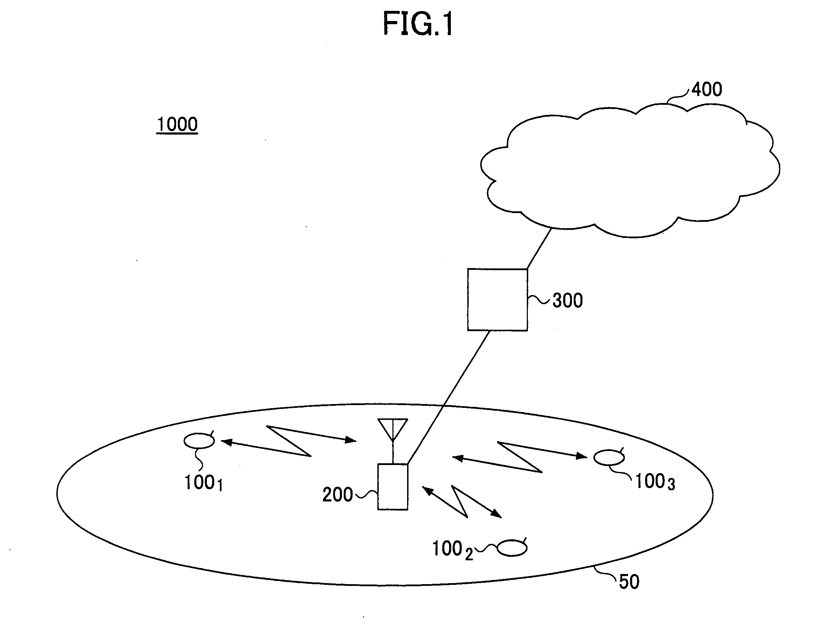

First, a radio communication system including a base station apparatus according to an embodiment of the present invention is described with reference to Fig. 1.

As shown in Fig. 1, the radio communication system 1000, which may be an Evolved UTRA (Universal Terrestrial Radio Access) and UTRAN (UTRA Network) system (also as known as an LTE (Long Term Evolution) system or a super 3G system), includes a base station apparatus (eNB: eNodeB) 200 and plural mobile stations (UE: user equipment) 100ₙ (100₁, 100₂, 100₃, ... 100ₙ; n: an integer greater than zero). The base station apparatus 200 is connected to an upper node such as an access gateway apparatus 300. The access gateway apparatus 300 is connected to a core network 400. In this case, the mobile stations 100ₙ are in communication with the base station apparatus 200 in a cell 50 based on the Evolved UTRA and UTRAN radio communication scheme. The access gateway apparatus 300 may be called an MME/SGW (Mobility Management Entity/Serving Gateway).

Each of the mobile stations (100₁, 100₂, 100₃, ... 100ₙ) has the same configuration, functions, and status. Therefore, unless otherwise described, the term mobile stations 100ₙ may be collectively used in the following descriptions. For convenience of explanation, the mobile stations 100ₙ are in radio communication with the base station 200. In general, user equipment terminals (UE: User Equipment) including mobile terminals and fixed terminals may be in communication with the base station 200.

As the radio access scheme in the radio communication system 1000, the OFDMA (Orthogonal Frequency Division Multiplexing Access) scheme and the SC-FDMA (Single-Carrier Frequency Division Multiplexing Access) scheme are used in downlink and uplink communications, respectively. As described above, the OFDMA scheme is a transmission scheme in which a frequency band is divided into plural sub-carriers having narrower frequency bands and data are transmitted on the respective sub-carriers. The SC-FDMA scheme is a transmission scheme in which a frequency band is divided so that different frequencies can be separately used among plural terminals and as a result, interference between terminals can be reduced.

Next, communication channels used in the Evolved UTRA and UTRAN system are described below.

In downlink communications, a Physical Downlink Shared Channel (PDSCH) that is shared among the mobile stations 100ₙ and a Physical Downlink Control Channel (PDCCH) as a downlink control channel are used. Namely, the downlink channels mean the Physical Downlink Shared Channel and the Physical Downlink Control Channel. In downlink, transport format information and user information of the user to which the Physical Downlink Shared Channel is transmitted, transport format information and user information of the user from which a Physical Uplink Shared Channel (PUSCH) is transmitted, acknowledge information of the PUSCH, and the like are reported via the Physical Downlink Control Channel (PDCCH). User data are transmitted via the Physical Downlink Shared Channel (PDSCH).

It should be noted that a transport channel mapped to the Physical Downlink Shared Channel is a downlink shared channel (DL-SCH). Namely, user data are mapped to the DL-SCH.

The transport format information and the user information of the user to which the Physical Downlink Shared Channel is transmitted are called Downlink Scheduling Information. The transport format information and the user information of the user from which the Physical Uplink Shared Channel (PUSCH) is transmitted are called Uplink Scheduling Grant. The Downlink Scheduling Information may be called Downlink Assignment Information or Downlink Scheduling Grant. The Downlink Scheduling Information and the Uplink Scheduling Grant may be collectively called Downlink Control Information.

In downlink communications, a Downlink Reference Signal (DL RS) is transmitted as a pilot signal. For example, the Downlink Reference Signal is used by the mobile station to perform channel estimation in downlink or to measure radio quality.

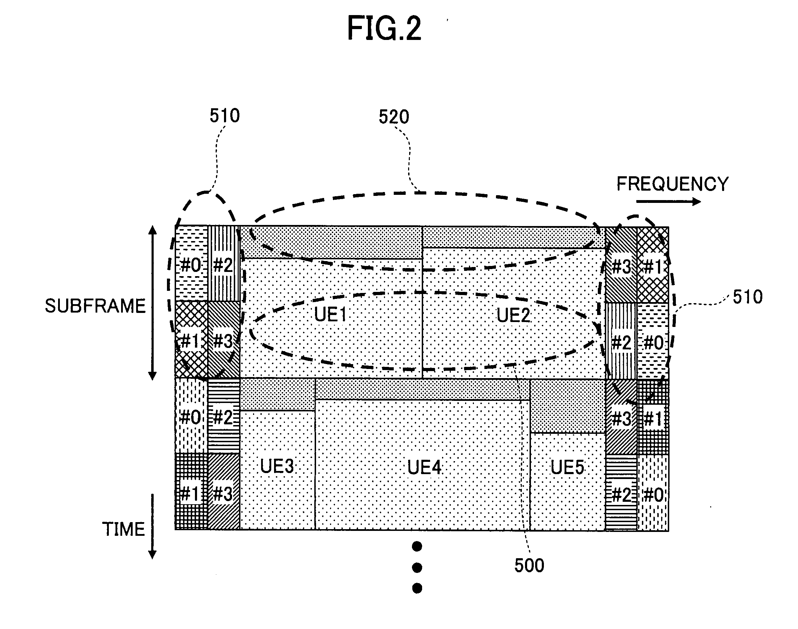

In uplink communications, the Physical Uplink Shared Channel (PUSCH) that is shared among the mobile stations 100ₙ and an LTE uplink control channel are used. Namely, the uplink channels mean the Physical Uplink Shared Channel and the LTE uplink control channel. The LTE uplink control channel has two types; one is to be time-multiplexed with the Physical Uplink Shared Channel (PUSCH) and the other is to be frequency-multiplexed with the Physical Uplink Shared Channel (PUSCH). Fig. 2 shows uplink control channel mapping.

In Fig. 2, frequency-multiplexed uplink control channels are mapped to different locations between two slots in the subframe (or frequency hopping is carried out). The reference numeral "500" represents the PUSCH, the reference numeral "510" represents the channels to be frequency-multiplexed with the PUSCH, and the reference numeral "520" represents the channels to be time-multiplexed with the PUSCH. In Fig. 2, the uplink control channels to be time-multiplexed with the PUSCH are mapped to the beginning of the subframe. Alternatively, the uplink control channels to be time-multiplexed with the PUSCH may be mapped to any midpoint in the subframe. Alternatively, the uplink control channels to be time-multiplexed with the PUSCH may be transmitted as part of the PUSCH.

In uplink, downlink quality information (CQI: Channel Quality Indicator) to be used for scheduling and Adaptive Modulation and Coding Scheme (AMCS) for the downlink shared channel, and acknowledge information (HARQ ACK information) of the PDSCH are transmitted via the LTE uplink control channel. In addition, user data are transmitted via the PUSCH.

It should be noted that a transport channel mapped to the Physical Uplink Shared Channel is an uplink shared channel (UL-SCH). Namely, user data are mapped to the UL-SCH.

For example, the user data represent IP packets such as those in Web browsing, FTP, and VoIP, and control signals for Radio Resource Control (RRC) processing. In the following descriptions, the user data are also called packet data. For example, the user data may be called the DL-SCH or the UL-SCH in terms of the transport channel, or may be called a dedicated traffic channel (DTCH) or a dedicated control channel (DCCH) in terms of a logical channel.

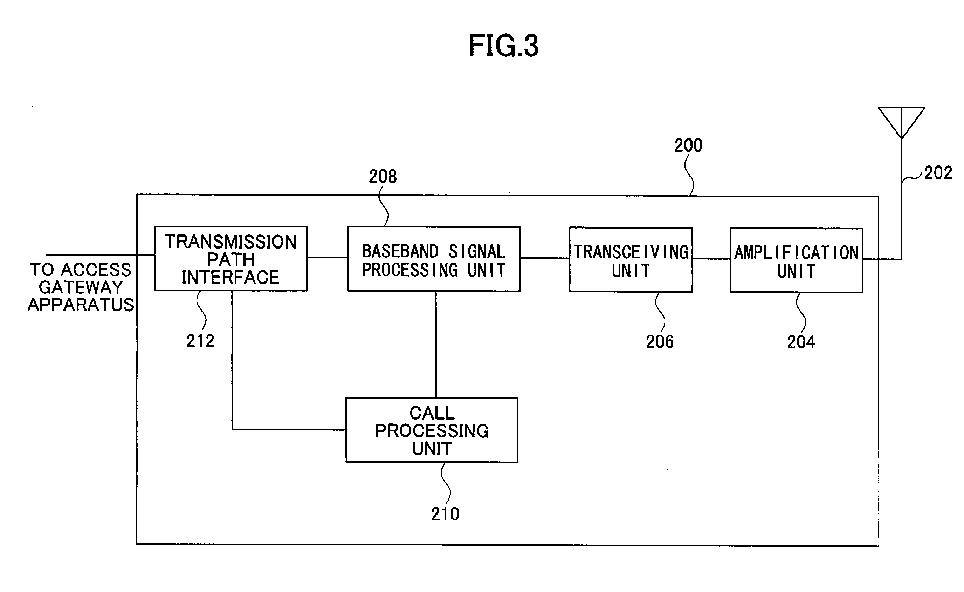

Next, the base station apparatus 200 according to an embodiment of the present invention is described below with reference to Fig. 3.

The base station apparatus 200 includes a transceiving antenna 202, an amplification unit 204, a transceiving unit 206, a baseband signal processing unit 208, a call processing unit 210, and a transmission path interface 212.

Packet data to be transmitted from the base station apparatus 200 to the mobile station 100ₙ through downlink are input to the baseband signal processing unit 208 from the upper node such as the access gateway apparatus 300 associated with the base station apparatus 200 via the transmission path interface 212.

In the baseband signal processing unit 208, packet data undergo Packet Data Convergence Protocol (PDCP) layer transmission processing, segmentation/concatenation, Radio Link Control (RLC) layer transmission processing such as RLC retransmission control, MAC retransmission control, for example, Hybrid Automatic Repeat request (HARQ) transmission processing, scheduling, transmission format selection, channel coding, and Inverse Fast Fourier Transform (IFFT) processing, and then are forwarded to the transceiving unit 206.

In the transceiving unit 206, the baseband signal output from the baseband signal processing unit 208 undergoes frequency conversion processing for converting the baseband signal to a radio frequency signal, which is then amplified by the amplification unit 204 and transmitted from the transceiving antenna 202.

On the other hand, regarding packet data transmitted from the mobile station 100ₙ to the base station apparatus 200 in uplink, the radio frequency signal received by the transceiving antenna 202 is amplified by the amplification unit 204, frequency-converted into a baseband signal by the transceiving unit 206, and input to the baseband signal processing unit 208.

In the baseband signal processing unit 208, the input baseband signal undergoes Fast Fourier Transform (FFT) processing, error correction decoding, reception processing for the MAC retransmission control, RLC layer reception processing, and Packet Data Convergence Protocol (PDCP) layer reception processing, and then is forwarded to the access gateway apparatus 300 via the transmission path interface 212.

As described above, the packet data are voice signals in VoIP and signals transmitted by each application such as FTP, streaming, and Web browsing.

The baseband signal processing unit 208 determines whether synchronization in downlink is established between the mobile station 100ₙ and the base station apparatus 200 based on an uplink signal transmitted from the mobile station 100ₙ, as described below.

The call processing unit 210 performs management of the communication status between the mobile station 100ₙ and the base station apparatus 200, status management of the base station apparatus 200, and allocation of radio resources. The call processing unit 210 receives the synchronization status in downlink from an out-of-synchronization determining unit 2084 in the baseband signal processing unit 208. The call processing unit 210 may disconnect communications with the mobile station 100ₙ with which synchronization in downlink is determined to be lost by the baseband signal processing unit 208. For example, the call processing unit 210 may disconnect communications with the mobile station 100ₙ with which synchronization in downlink is determined to be lost by the baseband signal processing unit 208, when the condition that synchronization in downlink is lost continues for a predetermined period of time or more.

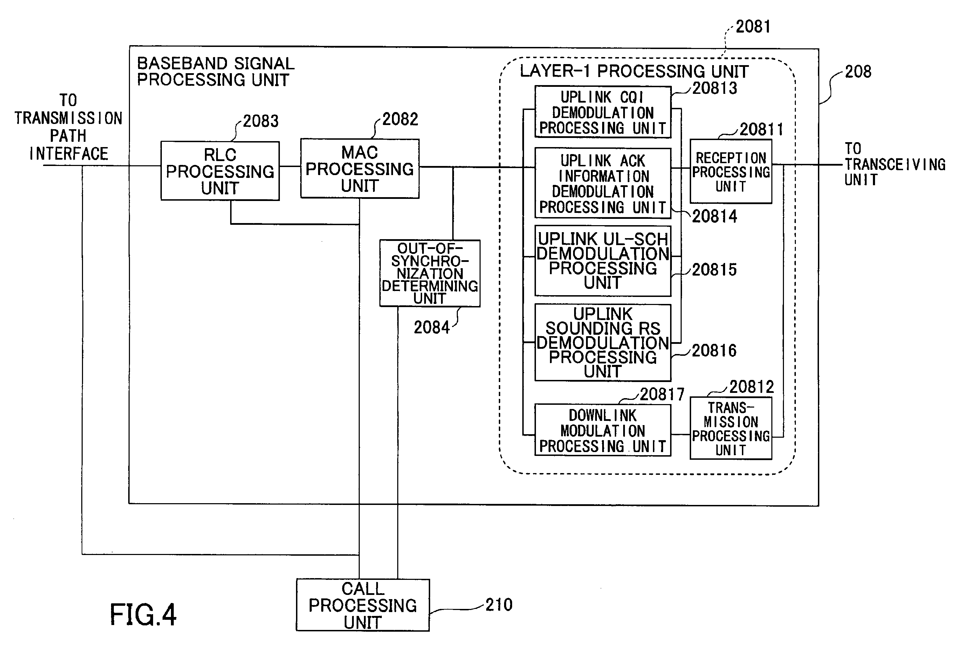

Next, a configuration of the baseband signal processing unit 208 is described below with reference to Fig. 4.

The baseband signal processing unit 208 includes a Layer-1 processing unit 2081, a Medium Access Control (MAC) processing unit 2082, an RLC processing unit 2083, and an out-of-synchronization determining unit 2084. The Layer-1 processing unit 2081 includes a reception processing unit 20811, a transmission processing unit 20812, an uplink CQI demodulation processing unit 20813, an uplink ACK information demodulation processing unit 20814, an uplink UL-SCH demodulation processing unit 20815, an uplink Sounding RS demodulation processing unit 20816, and a downlink modulation processing unit 20817.

The Layer-1 processing unit 2081, the MAC processing unit 2082, the RLC processing unit 2083, and the out-of-synchronization determining unit 2084 in the baseband signal processing unit 208, and the call processing unit 210 are connected with one another. The uplink CQI demodulation processing unit 20813, the uplink ACK information demodulation processing unit 20814, the uplink UL-SCH demodulation processing unit 20815, the uplink Sounding RS demodulation processing unit 20816, the downlink modulation processing unit 20817 in the Layer-1 processing unit 2081, the MAC processing unit 2082, and the out-of-synchronization determining unit 2084 are connected with one another.

The Layer-1 processing unit 2081 carries out channel coding and IFFT processing of the data to be transmitted in downlink, channel decoding, inverse discrete Fourier transform (IDFT) processing, and FFT processing of the data transmitted in uplink, and the like. Specifically, signals to be transmitted in downlink such as the downlink shared channel (DL-SCH), DL Scheduling Information, UL Scheduling Grant, acknowledge information of the UL-SCH, a broadcast channel (BCH), a paging channel (PCH), and the like undergo coding processing such as turbo coding and convolutional coding, interleaving processing, multiplexing processing with the DL RS, and the like in the downlink modulation processing unit 20817, further undergo IFFT processing, cyclic prefix (CP) addition processing, and the like in the transmission processing unit 20812, and then are forwarded to the transceiving unit 206.

On the other hand, regarding signals transmitted in uplink such as CQI, ACK information, the UL-SCH, a Demodulation Reference Signal (DM RS), a Sounding Reference Signal (Sounding RS), and the like, their baseband signals are input from the transceiving unit 206, and then undergo CP removal processing, FFT processing, frequency equalization processing, IDFT processing, and the like in the reception processing unit 20811. Among these signals after processing, the CQI is input to the uplink CQI demodulation processing unit 20813, the ACK information is input to the uplink ACK information demodulation unit 20814, the UL-SCH and the DM RS are input to the uplink UL-SCH demodulation processing unit 20815, and the Sounding RS is input to the uplink Sounding RS demodulation processing unit 20816.

The uplink CQI demodulation processing unit 20813 demodulates CQI as radio quality information and acquires a CQI value reported by the mobile station 100ₙ. The uplink CQI demodulation processing unit 20813 outputs to the MAC processing unit 2082 and the out-of-synchronization determining unit 2084 the CQI value reported by the mobile station 100ₙ. The CQI reported by the mobile station 100ₙ may be mapped to the uplink control channel to be time-multiplexed with the Physical Uplink Shared Channel or the uplink control channel to be frequency-multiplexed with the Physical Uplink Shared Channel, as described with reference to Fig. 2. Further, only the CQI may be transmitted, or the CQI may be multiplexed with other signals such as ACK information and a Scheduling Request and then transmitted.

The uplink ACK information demodulation processing unit 20814 demodulates ACK information that is acknowledge information of the downlink shared channel (DL-SCH) and acquires the ACK information of the DL-SCH transmitted to the mobile station 100ₙ. The uplink ACK information demodulation processing unit 20814 inputs the ACK information to the MAC processing unit 2082 and the out-of-synchronization determining unit 2084. The ACK information may be mapped to the uplink control channel to be time-multiplexed with the Physical Uplink Shared Channel or the uplink control channel to be frequency-multiplexed with the Physical Uplink Shared Channel. Further, only the ACK information may be transmitted, or the ACK information may be multiplexed with other signals such as CQI and a Scheduling Request and then transmitted.

The uplink UL-SCH demodulation processing unit 20815 determines whether the mobile station 100ₙ actually transmits the UL-SCH. For example, the uplink UL-SCH demodulation processing unit 20815 acquires an SIR of the DM RS to be time-multiplexed with the UL-SCH and determines whether the mobile station 100ₙ actually transmits the US-SCH based on the SIR. Specifically, the uplink UL-SCH demodulation processing unit 20815 may define a predetermined threshold, for example, and determine that the mobile station 100ₙ actually transmits the UL-SCH when the SIR is more than or equal to the predetermined threshold. The uplink UL-SCH demodulation processing unit 20815 may determine that the mobile station 100ₙ does not actually transmit the UL-SCH when the SIR is less than the predetermined threshold. For example, the predetermined threshold is set to a lower limit of the estimated SIR value in the case where the UL-SCH is transmitted. While the SIR of the DM RS is used in this example, an SIR of the UL-SCH or both the SIR of the DM RS and the SIR of the UL-SCH may be used.

The uplink UL-SCH demodulation processing unit 20815 supplies to the MAC control unit 2082 and the out-of-synchronization determining unit 2084 the determination result of whether the mobile station 100ₙ actually transmits the UL-SCH. Further, the uplink UL-SCH demodulation processing unit 20815 demodulates the uplink shared channel (UL-SCH) and supplies the demodulation result to the MAC processing unit 2082. The determination processing of whether the mobile station 100ₙ actually transmits the UL-SCH and the demodulation processing of the uplink shared channel (UL-SCH) are carried out in the subframe in which the mobile station 100ₙ is expected to transmit the UL-SCH in uplink. Specifically, the base station apparatus 200 instructs the mobile station 100ₙ to transmit the UL-SCH by means of UL Scheduling Grant at the timing prior to the subframe in which the mobile station 100ₙ is expected to transmit the UL-SCH, and then the determination processing and the demodulation processing are carried out in the subframe.

The uplink Sounding RS demodulation processing unit 20816 calculates an SIR of the Sounding RS transmitted in uplink from the mobile station 100ₙ, and then input the SIR of the Sounding RS to the MAC processing unit 2082.

Other than demodulation processing of these signals, a Release Request and a Scheduling Request may be demodulated in the Layer-1 processing unit 2081.

The MAC processing unit 2082 receives from the uplink CQI demodulation processing unit 20813 in the Layer-1 processing unit 2081 the CQI value reported by the mobile station 100ₙ, receives from the uplink ACK information demodulation processing unit 20814 in the Layer-1 processing unit 2081 the ACK information of the DL-SCH transmitted to the mobile station 100ₙ, receives from the uplink UL-SCH demodulation processing unit 20815 in the Layer-1 processing unit 2081 the determination result of whether the mobile station 100ₙ actually transmits the UL-SCH and the demodulation result of the uplink shared channel (UL-SCH), and receives from the uplink Sounding RS demodulation processing unit 20816 in the Layer-1 processing unit 2081 the SIR of the Sounding RS transmitted in uplink from the mobile station 100ₙ.

The MAC processing unit 2082 carries out MAC retransmission control of downlink packet data, for example, Hybrid Automatic Repeat request (HARQ) transmission processing, scheduling, transmission format selection, allocation of frequency resources, and the like. The scheduling means selection of the mobile station which receives packet data in the subframe via the downlink shared channel. The transmission format selection means determination of a modulation scheme, a coding rate, and a data size of the packet data to be received by the mobile station selected in the scheduling. For example, the determination of the modulation scheme, the coding rate, and the data size is made based on the CQI value reported in uplink by the mobile station. Further, the allocation of frequency resources means determination of resource blocks used for the packet data to be received by the mobile station selected in the scheduling. For example, the determination of resource blocks is made based on the CQI reported in uplink by the mobile station. The CQI reported by the mobile station is supplied from the Layer-1 processing unit 2081. The MAC processing unit 2082 supplies to the Layer-1 processing unit 2081 Downlink Scheduling Information, such as the ID of the user (mobile station) communicating via the Physical Downlink Shared Channel and transport format information of the packet data, which is determined in the scheduling, the transmission format selection, and the allocation of frequency resources. Further, the MAC processing unit 2082 supplies to the Layer-1 processing unit 2081 the packet data to be transmitted to the mobile station.

The MAC processing unit 2082 also carries out reception processing of MAC retransmission control of uplink packet data, scheduling, transmission format selection, allocation of frequency resources, and the like. The scheduling means selection of the mobile station which transmits packet data in a predetermined subframe via the shared channel. The transmission format selection means determination of a modulation scheme, a coding rate, and a data size of the packet data to be transmitted from the mobile station selected in the scheduling. For example, the determination of the modulation scheme, the coding rate, and the data size is made based on the SIR of the Sounding Reference Signal transmitted in uplink from the mobile station or path loss between the base station apparatus and the mobile station. Further, the allocation of frequency resources means determination of resource blocks used for the packet data to be transmitted from the mobile station selected in the scheduling. For example, the determination of resource blocks is made based on the SIR of the Sounding Reference Signal transmitted in uplink from the mobile station. The MAC processing unit 2082 generates UL Scheduling Grant, such as the ID of the user (mobile station) communicating via the Physical Uplink Shared Channel and transport format information of the user data, which is determined in the scheduling, the transmission format selection, and the allocation of frequency resources, and then supplies it to the Layer-1 processing unit 2081. Further, the MAC processing unit 2082 generates acknowledge information based on the demodulation result of the uplink shared channel (UL-SCH) and supplies the acknowledge information of the uplink shared channel (UL-SCH) to the Layer-1 processing unit 2081.

When the MAC processing unit 2082 is supplied from the out-of-synchronization determining unit 2084 the determination result that synchronization in downlink is lost between the mobile station 100ₙ and the base station apparatus 200, the MAC processing unit 2082 removes the mobile station 100ₙ from candidates for the scheduling. In other words, the MAC processing unit 2082 performs scheduling by assigning the downlink shared channel to some of mobile stations with which synchronization in downlink is not lost. The MAC processing unit 2082 may not only remove the mobile station 100ₙ from candidates for the scheduling for assigning the downlink shared channel, but also remove the mobile station 100ₙ from candidates for the scheduling for assigning the uplink shared channel.

In addition, the MAC processing unit 2082 observes whether the number of retransmissions of the downlink shared channel in the MAC layer exceeds the maximum number of retransmissions and supplies the observation result to the out-of-synchronization determining unit 2084.

In the RLC processing unit 2083, RLC layer transmission processing regarding the downlink packet data such as segmentation/concatenation, transmission processing of the RLC retransmission control, and the like, and RLC layer reception processing regarding the uplink data such as segmentation/concatenation, reception processing of the RLC retransmission control, and the like are carried out. In the RLC processing unit 2083, PDCP layer processing may be carried out in addition to the RLC layer processing.

The out-of-synchronization determining unit 2084 receives from the uplink CQI demodulation processing unit 20813 the CQI value reported by the mobile station 100ₙ and determines, based on the CQI value, whether synchronization in downlink is lost between the mobile station 100ₙ and the base station apparatus 200. For example, when the CQI value is more than or equal to a predetermined threshold, the out-of-synchronization determining unit 2084 may determine that synchronization in downlink is not lost (synchronization in downlink is established) between the mobile station 100ₙ and the base station apparatus 200. When the CQI value is less than the predetermined threshold, the out-of-synchronization determining unit 2084 may determine that synchronization in downlink is lost (synchronization in downlink is not established) between the mobile station 100ₙ and the base station apparatus 200. The out-of-synchronization determining unit 2084 may determine whether synchronization in downlink is lost based on hysteresis or protection steps (i.e. setting of margins).

Specifically, assuming that a threshold TH is used for determination of the out-of-synchronization status in downlink from the established synchronization status (in-synchronization status) in downlink, the out-of-synchronization determining unit 2084 may use a threshold TH+2 for determination of the established synchronization status from the out-of-synchronization status. In this example, "+2" corresponds to hysteresis. It should be noted that "+2" is a mere example of hysteresis and any value other than "2" may be used as appropriate.

Alternatively, in the case where the out-of-synchronization determining unit 2084 determines the out-of-synchronization status in downlink from the established synchronization status in downlink, when the condition that the CQI value is less than the predetermined threshold continues for a predetermined period of time (referred to as T1, below) or more, the out-of-synchronization determining unit 2084 may determine that synchronization in downlink is lost. In the case where the out-of-synchronization determining unit 2084 determines the established synchronization status in downlink from the out-of-synchronization status in downlink, when the condition that the CQI value is more than or equal to the predetermined threshold continues for a predetermined period of time (referred to as T2, below) or more, the out-of-synchronization determining unit 2084 may determine that synchronization in downlink is established. T1 may be the same as or different from T2. For example, T1 may be equal to 200 ms and T2 may be equal to 100 ms. The use of a longer period of time for the determination such as 100 ms or 200 ms can reduce errors in the determination. It should be noted that the values of 100 ms and 200 ms are mere examples and any other value may be used.

Alternatively, when the CQI value is not zero, the out-of-synchronization determining unit 2084 may determine that synchronization in downlink is not lost between the mobile station 100ₙ and the base station apparatus 200. When the CQI value is zero, the out-of-synchronization determining unit 2084 may determine that synchronization in downlink is lost between the mobile station 100ₙ and the base station apparatus 200. In this example, hysteresis or protection steps as described above may be used for determination.

In addition, the out-of-synchronization determining unit 2084 receives from the ACK information demodulation processing unit 20814 the ACK information transmitted from the mobile station 100ₙ and determines, based on the ACK information, whether synchronization in downlink is lost between the mobile station 100ₙ and the base station apparatus 200.

Next, the significance of the ACK information is described below. The ACK information includes positive acknowledgement (ACK) indicating that the downlink shared channel is successfully received, negative acknowledgement (NACK) indicating that the downlink shared channel is not successfully received, and discontinuous transmission (DTX) indicating that the mobile station 100ₙ does not recognize the transmission of the downlink shared channel. DTX occurs when the mobile station 100ₙ does not transmit ACK information at the timing of ordinarily transmitting the ACK information. This situation occurs when the mobile station 100ₙ cannot successfully receive DL Scheduling Information indicating that the downlink shared channel is to be transmitted to the mobile station 100ₙ. In summary, the determination of whether synchronization in downlink is lost can be made based on the frequency of NACK and DTX.

For example, when the condition that the ACK information is NACK or DTX continues for a predetermined period of time (referred to as T3, below) or more while the out-of-synchronization determining unit 2084 determines that synchronization in downlink is not lost, the out-of-synchronization determining unit 2084 may determine that synchronization in downlink is lost between the mobile station 100ₙ and the base station apparatus 200. Specifically, when the ACK information is always NACK or DTX for the period of time T3, the out-of-synchronization determining unit 2084 may determine that synchronization in downlink is lost. For example, T3 may be equal to 200 ms. The use of a longer period of time for the determination such as 200 ms can reduce errors in the determination. It should be noted that the value of 200 ms is a mere example and any other value may be used. Alternatively, when the condition that the ACK information is ACK occurs just one time while the out-of-synchronization determining unit 2084 determines that synchronization in downlink is lost, the out-of-synchronization determining unit 2084 may determine that synchronization in downlink is not lost between the mobile station 100ₙ and the base station apparatus 200.

Alternatively, when the out-of-synchronization determining unit 2084 determines the established synchronization status in downlink from the out-of-synchronization status in downlink between the mobile station 100ₙ and the base station apparatus 200, the out-of-synchronization determining unit 2084 may make the determination based on the CQI value rather than the ACK information. Alternatively, the out-of-synchronization determining unit 2084 may make both the determination based on the ACK information and the determination based on the CQI value. When both of the determinations indicate that synchronization is not lost, the out-of-synchronization determining unit 2084 may determine that synchronization is not lost. Alternatively, when either of the determinations indicates that synchronization is not lost, the out-of-synchronization determining unit 2084 may determine that synchronization is not lost.

The out-of-synchronization determining unit 2084 may make the determination based on the number of times (referred to as X3, below) where a predetermined condition occurs, rather than based on the predetermined period of time T3. Specifically, when the condition that the ACK information is NACK or DTX continues X3 times, the out-of-synchronization determining unit 2084 may make the determination as described above. Alternatively, when the condition that the ACK information is ACK occurs just one time while the out-of-synchronization determining unit 2084 determines that synchronization in downlink is lost, the out-of-synchronization determining unit 2084 may determine that synchronization in downlink is not lost between the mobile station 100ₙ and the base station apparatus 200. For example, X3 times may be equal to ten times. Observing the condition for a larger number of times such as ten times can reduce errors in the determination. It should be noted that the value of ten is a mere example and any other value may be used.

In this example, when the condition that the ACK information is ACK occurs just one time, the out-of-synchronization determining unit 2084 determines that synchronization is not lost. When the condition that the ACK information is NACK or DTX continues for the period of time T3, the out-of-synchronization determining unit 2084 determines that synchronization is lost. Alternatively, when the ratio of NACK or DTX to all sets of the ACK information during the period of time T3 is more than or equal to a predetermined threshold, the out-of-synchronization determining unit 2084 may determine that synchronization is lost. When the ratio of NACK or DTX to all sets of the ACK information during the period of time T3 is less than the predetermined threshold, the out-of-synchronization determining unit 2084 may determine that synchronization is not lost. In this example, hysteresis may be used for the threshold, or protection steps may be used for the determination.

Alternatively, the out-of-synchronization determining unit 2084 may determine the synchronization status in downlink between the mobile station 100ₙ and the base station apparatus 200 based on the observation result of whether the number of retransmissions of downlink shared channel in the MAC layer, which is received from the MAC processing unit 2082, exceeds the maximum number of retransmissions.

For example, when the condition that the number of retransmissions of the downlink shared channel exceeds the maximum number of retransmissions continues X5 times or more during a predetermined period of time (referred to as T4, below) while the out-of-synchronization determining unit 2084 determines that synchronization in downlink is not lost, the out-of-synchronization determining unit 2084 may determine that synchronization in downlink is lost between the mobile station 100ₙ and the base station apparatus 200. Alternatively, when the condition that the number of retransmissions of the downlink shared channel exceeds the maximum number of retransmissions occurs less than X5 times during the predetermined period of time (T4), the out-of-synchronization determining unit 2084 may determine that synchronization in downlink is not lost. For example, T4 may be equal to 200 ms. The use of a longer period of time for the observation such as 200 ms can reduce errors in the determination. It should be noted that the value of 200 ms is a mere example and any other value may be used. Further, X5 times may be equal to three times. Observing the condition for a larger number of times such as three times can reduce errors in the determination. It should be noted that the value of three is a mere example and any other value may be used.

Alternatively, when the out-of-synchronization determining unit 2084 determines the established synchronization status in downlink from the out-of-synchronization status in downlink between the mobile station 100ₙ and the base station apparatus 200, the out-of-synchronization determining unit 2084 may make the determination based on the CQI value rather than the condition that the number of retransmissions exceeds the maximum number of retransmissions. Alternatively, the out-of-synchronization determining unit 2084 may make both the determination based on the condition that the number of retransmissions exceeds the maximum number of retransmissions and the determination based on the CQI value. When both of the determinations indicate that synchronization is not lost, the out-of-synchronization determining unit 2084 may determine that synchronization is not lost. Alternatively, when either of the determinations indicates that synchronization is not lost, the out-of-synchronization determining unit 2084 may determine that synchronization is not lost. In this example, hysteresis may be used for the threshold (the value of X5), or protection steps may be used for the determination, as described above.

In addition, the out-of-synchronization determining unit 2084 receives from the uplink UL-SCH demodulation processing unit 20815 the determination result of whether the mobile station 100ₙ actually transmits the UL-SCH and determines, based on the determination result, whether synchronization in downlink is lost between the mobile station 100ₙ and the base station apparatus 200.

Next, the significance of the determination result of whether the mobile station 100ₙ actually transmits the UL-SCH is described below. The determination of whether the mobile station 100ₙ actually transmits the UL-SCH is made when the base station apparatus 200 provides to the mobile station 100ₙ UL Scheduling Grant at the timing prior to the subframe, which instructs the mobile station 100ₙ to transmit the UL-SCH in the subframe. Accordingly, the determination result that the mobile station 100ₙ does not transmit the UL-SCH means that the mobile station 100ₙ cannot successfully receive the UL Scheduling Grant. In summary, the determination of whether synchronization in downlink is lost can be made based on the determination result of whether the mobile station 100ₙ actually transmits the UL-SCH.

For example, when the determination result that the mobile station 100ₙ does not actually transmit the UL-SCH continues for a predetermined period of time (referred to as T3, below) or more while the out-of-synchronization determining unit 2084 determines that synchronization in downlink is not lost, the out-of-synchronization determining unit 2084 may determine that synchronization in downlink is lost between the mobile station 100ₙ and the base station apparatus 200. Specifically, when it is determined at all the reception timings of the UL-SCH that the mobile station 100ₙ does not actually transmits the UL-SCH, the out-of-synchronization determining unit 2084 may determine that synchronization in downlink is lost. For example, T3 may be equal to 200 ms. The use of a longer period of time for the determination such as 200 ms can reduce errors in the determination. It should be noted that the value of 200 ms is a mere example and any other value may be used. Alternatively, when the determination result that the mobile station 100ₙ actually transmits the UL-SCH is obtained just one time while the out-of-synchronization determining unit 2084 determines that synchronization in downlink is lost, the out-of-synchronization determining unit 2084 may determine that synchronization in downlink is not lost between the mobile station 100ₙ and the base station apparatus 200.

Alternatively, when the out-of-synchronization determining unit 2084 determines the established synchronization status in downlink from the out-of-synchronization status in downlink between the mobile station 100ₙ and the base station apparatus 200, the out-of-synchronization determining unit 2084 may make the determination based on the CQI value rather than the determination result of whether the mobile station 100ₙ actually transmits the UL-SCH. Alternatively, the out-of-synchronization determining unit 2084 may make both the determination based on the determination result of whether the mobile station 100ₙ actually transmits the UL-SCH and the determination based on the CQI value. When both of the determinations indicate that synchronization is not lost, the out-of-synchronization determining unit 2084 may determine that synchronization is not lost. Alternatively, when either of the determinations indicates that synchronization is not lost, the out-of-synchronization determining unit 2084 may determine that synchronization is not lost.

The out-of-synchronization determining unit 2084 may make the determination based on the number of times (referred to as X3, below) where a predetermined condition occurs, rather than based on the predetermined period of time T3. Specifically, when the determination result that the mobile station 100ₙ does not actually transmit the UL-SCH continues X3 times, the out-of-synchronization determining unit 2084 may make the determination as described above. Alternatively, when the determination result that the mobile station 100ₙ actually transmits the UL-SCH is obtained just one time while the out-of-synchronization determining unit 2084 determines that synchronization in downlink is lost, the out-of-synchronization determining unit 2084 may determine that synchronization in downlink is not lost between the mobile station 100ₙ and the base station apparatus 200. For example, X3 times may be equal to three times. Observing the determination result for a larger number of times such as three times can reduce errors in the determination. It should be noted that the value of three is a mere example and any other value may be used.

In this example, when the determination result that the mobile station 100ₙ actually transmits the UL-SCH is obtained just one time, the out-of-synchronization determining unit 2084 determines that synchronization is not lost. When the determination result that the mobile station 100ₙ does not actually transmit the UL-SCH continues for the period of time T3 or more, the out-of-synchronization determining unit 2084 determines that synchronization is lost. Alternatively, when the ratio of the determination result that the mobile station 100ₙ does not actually transmit the UL-SCH compared to all sets of the determination result during the period of time T3 is more than or equal to a predetermined threshold, the out-of-synchronization determining unit 2084 may determine that synchronization is lost. When the ratio of the determination result that the mobile station 100ₙ does not actually transmit the UL-SCH compared to all sets of the determination result during the period of time T3 is less than the predetermined threshold, the out-of-synchronization determining unit 2084 may determine that synchronization is not lost. In this example, hysteresis may be used for the threshold, or protection steps may be used for the determination.

It should be noted that the out-of-synchronization determining unit 2084 may determine out-of-synchronization using one, two, or all of the determination of out-of-synchronization in downlink based on the CQI, the determination of out-of-synchronization in downlink based on the ACK information, and the determination of out-of-synchronization in downlink based on the determination result of whether the mobile station 100ₙ actually transmits the UL-SCH.

Further, the out-of-synchronization determining unit 2084 may make the determination of out-of-synchronization in downlink based on the CQI, the determination of out-of-synchronization in downlink based on the ACK information, and the determination of out-of-synchronization in downlink based on the determination result of whether the mobile station 100ₙ actually transmits the UL-SCH, when random access procedures are carried out. For example, the out-of-synchronization determining unit 2084 may determine out-of-synchronization in downlink based on radio quality information included in a Message-1 or Message-3 in the random access procedures. Alternatively, the out-of-synchronization determining unit 2084 may determine out-of-synchronization in downlink based on acknowledge information of a Message-2 or Message-4 in the random access procedures. Alternatively, the out-of-synchronization determining unit 2084 may determine out-of-synchronization in downlink based on the determination result of whether a Message-3 in the random access procedures is actually transmitted.

Alternatively, the out-of-synchronization determining unit 2084 may determine out-of-synchronization in downlink based on the decoding result of a Message-3 in the random access procedures. Specifically, when the CRC result of the Message-3 in the random access procedures is OK, the out-of-synchronization determining unit 2084 may determine that synchronization is established. When the CRC result of the Message-3 in the random access procedures is NG after the maximum number of retransmissions, the out-of-synchronization determining unit 2084 may determine that synchronization is not established. The situation where the CRC result is NG after the maximum number of retransmissions means that the decoding result is NG after HARQ retransmissions.

Alternatively, the out-of-synchronization determining unit 2084 may determine out-of-synchronization in downlink based on the decoding result of the uplink shared channel corresponding to UL Scheduling Grant included in a Message-2 in the random access procedures. Specifically, when the CRC result of the uplink shared channel corresponding to UL Scheduling Grant included in the Message-2 in the random access procedures is OK, the out-of-synchronization determining unit 2084 may determine that synchronization is established. When the CRC result of the uplink shared channel corresponding to UL Scheduling Grant included in the Message-2 in the random access procedures is NG after the maximum number of retransmissions, the out-of-synchronization determining unit 2084 may determine that synchronization is not established.

The out-of-synchronization determining unit 2084 supplies to the MAC processing unit 2082 and the call processing unit 210 the determination result of out-of-synchronization in downlink for the mobile station 100ₙ, which is determined as described above.

While the out-of-synchronization determining unit 2084 determines the synchronization status in downlink, that is whether synchronization is lost, as described above, the synchronization status in downlink may be interpreted as the synchronization status in uplink. In other words, the out-of-synchronization determining unit 2084 may determine the synchronization status in uplink as described above. In this case, the synchronization status in downlink is considered to be the same as the synchronization status in uplink.

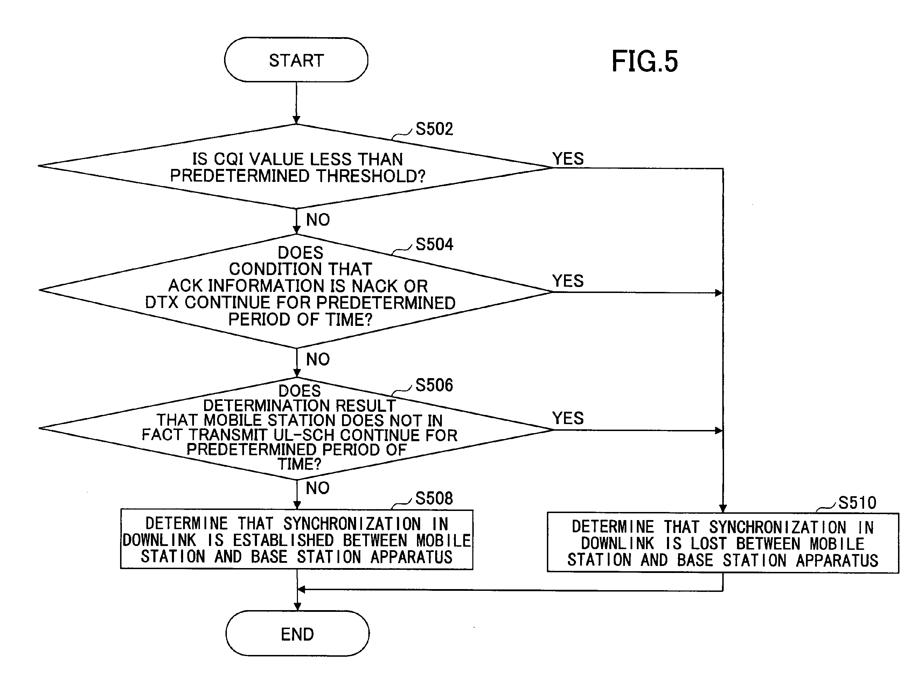

Next, a method of detecting out-of-synchronization in downlink as a transmission control method in the base station apparatus 200 according to this embodiment is described below with reference to Fig. 5.

The out-of-synchronization determining unit 2084 in the base station apparatus 200 determines, based on the CQI value reported by the mobile station 100ₙ and input from the uplink CQI demodulation processing unit 20813, whether synchronization in downlink is lost between the mobile station 100ₙ and the base station apparatus (step S502). For example, when the input CQI value is more than or equal to a predetermined threshold, the out-of-synchronization determining unit 2084 determines that synchronization is not lost between the mobile station 100ₙ and the base station apparatus 200. When the input CQI value is less than the predetermined threshold, the out-of-synchronization determining unit 2084 determines that synchronization is lost between the mobile station 100ₙ and the base station apparatus 200.

When the input CQI value is more than or equal to the predetermined threshold (step S502: NO), the out-of-synchronization determining unit 2084 determines, based on the ACK information transmitted from the mobile station 100ₙ and input from the uplink ACK information demodulation processing unit 20814, whether synchronization in downlink is lost between the mobile station 100ₙ and the base station apparatus 200 (step S504). For example, when the condition that the ACK information is NACK or DTX continues for a predetermined period of time or more while the out-of-synchronization determining unit 2084 determines that synchronization in downlink is not lost, the out-of-synchronization determining unit 2084 determines that synchronization in downlink is lost between the mobile station 100ₙ and the base station apparatus 200. When the condition that the ACK information is NACK or DTX continues for less than the predetermined period of time, the out-of-synchronization determining unit 2084 determines that synchronization in downlink is not lost between the mobile station 100ₙ and the base station apparatus 200.

In step S504, the out-of-synchronization determining unit 2084 may determine out-of-synchronization in downlink based on the condition that the number of retransmissions exceeds the maximum number of retransmissions, as described above, rather than based on the ACK information. Alternatively, in step S504, the out-of-synchronization determining unit 2084 may make both the determination based on the ACK information and the determination based on the condition that the number of retransmissions exceeds the maximum number of retransmissions.

When the condition that the ACK information is NACK or DTX continues for less than the predetermined period of time (step S504: NO), the out-of-synchronization determining unit 2084 determines, based on the determination result input from the uplink UL-SCH demodulation processing unit 20815 of whether the mobile station 100ₙ actually transmits the UL-SCH, whether synchronization in downlink is lost between the mobile station 100ₙ and the base station apparatus 200 (step S506). For example, when the determination result that the mobile station 100ₙ does not actually transmit the UL-SCH continues for a predetermined period of time or more while the out-of-synchronization determining unit 2084 determines that synchronization in downlink is not lost, the out-of-synchronization determining unit 2084 determines that synchronization in downlink is lost between the mobile station 100ₙ and the base station apparatus 200. When the determination result that the mobile station 100ₙ does not actually transmit the UL-SCH continues for less than the predetermined period of time, the out-of-synchronization determining unit 2084 determines that synchronization in downlink is not lost between the mobile station 100ₙ and the base station apparatus 200.

When the determination result that the mobile station 100ₙ does not actually transmit the UL-SCH continues for less than the predetermined threshold (step S506: NO), the out-of-synchronization determining unit 2084 determines that synchronization in downlink is established between the mobile station 100ₙ and the base station apparatus 200 (step S508).

On the other hand, when the input CQI value is less than the predetermined threshold in step S502 (step S502: YES), when the condition that the ACK information is NACK or DTX continues for the predetermined period of time or more in step S504 (step S504: YES), or when the determination result that the mobile station 100ₙ does not actually transmit the UL-SCH continues for the predetermined threshold or more in step S506 (step S506: YES), the out-of-synchronization determining unit 2084 determines that synchronization in downlink is lost between the mobile station 100ₙ and the base station apparatus 200 (step S510).

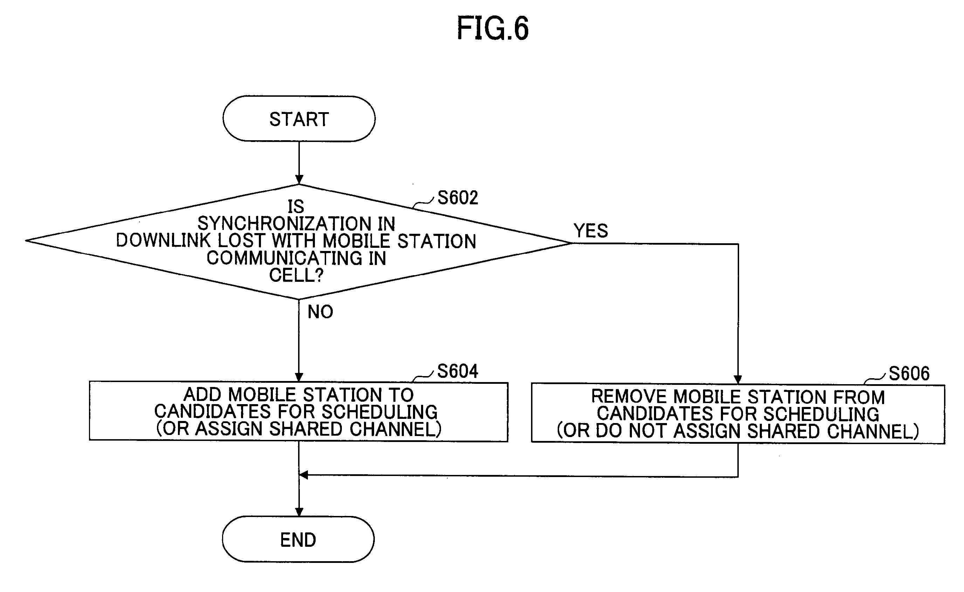

Next, a scheduling method in the MAC processing unit 2082 as a transmission control method in the base station apparatus 200 according to this embodiment is described below with reference to Fig. 6.

The MAC processing unit 2082 receives from the out-of-synchronization determining unit 2084 the determination result of whether synchronization in downlink is lost between the mobile station 100ₙ and the base station apparatus 200.

The MAC processing unit 2082 determines, based on the determination result of whether synchronization in downlink is lost between the mobile station 100ₙ and the base station apparatus 200, whether synchronization in downlink is lost with the mobile station communicating in the cell (step S602).

When it is determined that synchronization in downlink is not lost with the mobile station communicating in the cell (step S602: NO), the MAC processing unit 2082 adds this mobile station communicating in the cell to candidates for the scheduling (step S604). The candidates for the scheduling mean candidates for the scheduling to assign the shared channel. In other words, whether the shared channel is actually assigned depends on the result of the scheduling. In step S604, the MAC processing unit 2082 may also assign the shared channel to the mobile station communicating in the cell. Assigning the shared channel means actually allocating radio resources and allowing for communications.

On the other hand, when it is determined that synchronization in downlink is lost with the mobile station communicating in the cell (step S602: YES), the MAC processing unit 2082 removes this mobile station communicating in the cell from candidates for the scheduling (step S606). In step S606, the MAC processing unit 2082 may not assign the shared channel to the mobile station communicating in the cell.

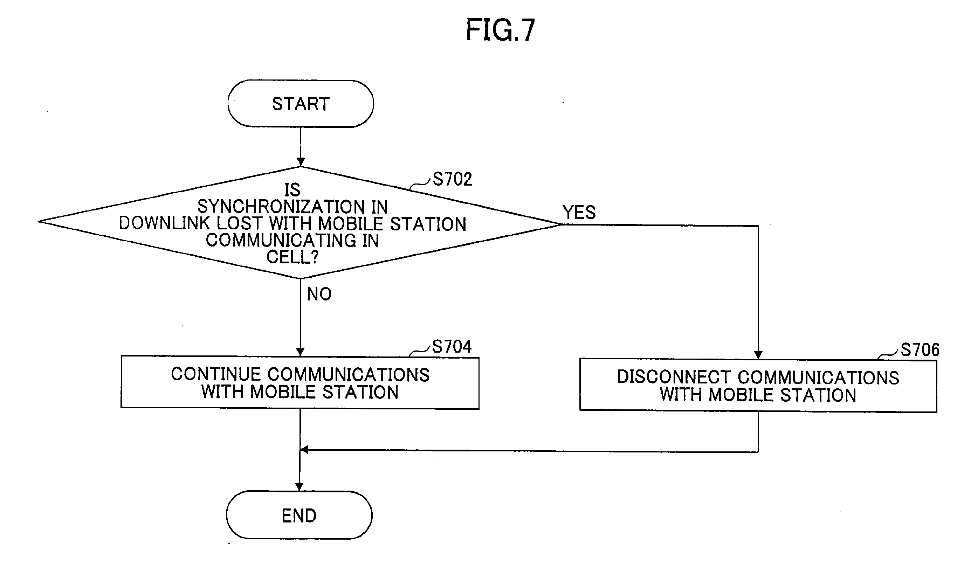

Next, a transmission control method in the call processing unit 210 as a transmission control method in the base station apparatus 200 according to this embodiment is described below with reference to Fig. 7.

At the start of communications, when the condition that synchronization in downlink is lost continues for a predetermined period of time or more, the baseband signal processing unit 208 input to the call processing unit 210 information indicating that synchronization is lost.

The call processing unit 210 determines whether synchronization in downlink is lost with the mobile station communicating in the cell (step S702). For example, when the call processing unit 210 receives from the baseband signal processing unit 208 the information indicating that synchronization is lost, the call processing unit 210 determines that synchronization is lost. Otherwise, the call processing unit 210 determines that synchronization is established.

When it is determined that synchronization in downlink is established with the mobile station communicating in the cell (step S702: NO), the call processing unit 210 continues communications with the mobile station (step S704).

On the other hand, when it is determined that synchronization in downlink is lost with the mobile station communicating in the cell (step S702: YES), the call processing unit 210 disconnects communications with the mobile station (step S706).

Next, a radio communication system including a base station apparatus according to another embodiment of the present invention is described below.

The base station apparatus according to this embodiment detects out-of-synchronization in downlink by determining DTX based on CQI.

The configuration of the radio communication system according to this embodiment is the same as the configuration shown in Fig. 1. The configuration of the base station apparatus is the same as the configuration shown in Figs. 3 and 4.

The mobile station 100ₙ does not transmit CQI upon detecting out-of-synchronization in downlink. The out-of-synchronization determining unit 2084 determines whether the mobile station 100ₙ actually transmits CQI at the timing of transmitting the CQI. For example, when the mobile station 100ₙ does not transmit CQI at the timing of transmitting the CQI, in other words, when the CQI is not input from the uplink CQI demodulation processing unit 20813, the out-of-synchronization determining unit 2084 determines that synchronization in downlink is lost between the mobile station 100ₙ and the base station apparatus 200. When the mobile station 100ₙ transmits CQI at the timing of transmitting the CQI, in other words, when the CQI is input from the uplink CQI demodulation processing unit 20813, the out-of-synchronization determining unit 2084 determines that synchronization in downlink is not lost (synchronization is established) between the mobile station 100ₙ and the base station apparatus 200.

Next, a radio communication system including a base station apparatus according to another embodiment of the present invention is described below.

The base station apparatus according to this embodiment detects out-of-synchronization in downlink by determining DTX based on the Sounding RS.

The configuration of the radio communication system according to this embodiment is the same as the configuration shown in Fig. 1. The configuration of the base station apparatus is the same as the configuration shown in Figs. 3 and 4.

The mobile station 100ₙ does not transmit the Sounding RS upon detecting out-of-synchronization in downlink. The out-of-synchronization determining unit 2084 determines whether the mobile station 100ₙ actually transmits the Sounding RS at the timing of transmitting the Sounding RS. For example, when the mobile station 100ₙ does not transmit the Sounding RS at the timing of transmitting the Sounding RS, in other words, when the Sounding RS is not input from the uplink Sounding RS demodulation processing unit 20816, the out-of-synchronization determining unit 2084 determines that synchronization in downlink is lost between the mobile station 100ₙ and the base station apparatus 200. When the mobile station 100ₙ transmits the Sounding RS at the timing of transmitting the Sounding RS, in other words, when the Sounding RS is input from the uplink Sounding RS demodulation processing unit 20816, the out-of-synchronization determining unit 2084 determines that synchronization in downlink is not lost (synchronization is established) between the mobile station 100ₙ and the base station apparatus 200.

While the present invention has been described by using the example of the Evolved UTRA and UTRAN system (also as known as an LTE (Long Term Evolution) system or a super 3G system), the base station apparatus and the transmission control method according to the present invention can be applied to any system in which shared channels are used in downlink and uplink communications.

While the expressions of "synchronization in downlink is lost/is not lost" are used in the embodiments, they may be expressed as "synchronization is not established/is established" or "Downlink Out-of-Synchronization/Downlink In-Synchronization".

While the present invention has been described by using specific values in order to facilitate the understanding of the present invention, those values are mere examples and various values may be used unless otherwise noted.

While the present invention has been explained with reference to specific examples, each example is merely illustrative and a person having ordinary skill will understand various alterations, modifications, substitutions, replacements and the like. While the apparatuses according to the examples of the present invention are explained in the form of the operational block diagrams for simplicity of explanation, such apparatuses may be realized by hardware, software or a combination thereof. The present invention is not limited to the above examples, but includes various alterations, modifications, substitutions, replacements and the like without departing the scope of the present invention.

This international application claims the benefit of the priority date of Japanese Patent Application No. 2007-211587 filed on August 14, 2007, the entire content of which is herein incorporated hereby by reference.

## Claims

1. A base station apparatus for communicating with a mobile station, comprising:
an out-of-synchronization determining unit configured to determine out-of-synchronization with the mobile station in downlink based on an uplink signal transmitted from the mobile station.

2. The base station apparatus as claimed in Claim 1, wherein:
the uplink signal transmitted from the mobile station includes radio quality information, and
the out-of-synchronization determining unit determines out-of-synchronization with the mobile station in downlink based on the radio quality information.

3. The base station apparatus as claimed in Claim 1, wherein:
the uplink signal transmitted from the mobile station includes acknowledgement information in response to a downlink signal, and
the out-of-synchronization determining unit determines out-of-synchronization with the mobile station in downlink based on the acknowledge information.

4. The base station apparatus as claimed in Claim 1, wherein:
the uplink signal transmitted from the mobile station includes radio quality information and acknowledgement information in response to a downlink signal, and
the out-of-synchronization determining unit determines out-of-synchronization with the mobile station in downlink based on the radio quality information and the acknowledge information in response to the downlink signal.

5. The base station apparatus as claimed in Claim 2, wherein:
the out-of-synchronization determining unit determines that synchronization with the mobile station in downlink is lost when a condition that the radio quality information is less than or equal to a predetermined threshold continues for a predetermined period of time or more.

6. The base station apparatus as claimed in Claim 3, wherein:
the out-of-synchronization determining unit determines that synchronization with the mobile station in downlink is lost when a condition that the acknowledge information is negative acknowledgement or is not transmitted continues for a predetermined period of time or more.

7. A base station apparatus for communicating with a mobile station, comprising:
an instructing unit configured to instruct the mobile station using a downlink signal to transmit an uplink signal; and
an out-of-synchronization determining unit configured to determine out-of-synchronization with the mobile station in downlink based on whether the uplink signal to be transmitted from the mobile station has been transmitted.

8. A base station apparatus for communicating with a mobile station, comprising:
an out-of-synchronization determining unit configured to determine out-of-synchronization with the mobile station in downlink based on the number of retransmissions of a downlink signal.

9. A base station apparatus for communicating with plural mobile stations, comprising:
an allocating unit configured to allocate no uplink resource and/or no downlink resource to a mobile station with an out-of-synchronization status in downlink based on the detected out-of-synchronization status in downlink.

10. A base station apparatus for communicating with plural mobile stations, comprising:
a disconnecting unit configured to disconnect communications with a mobile station with an out-of-synchronization status in downlink based on the detected out-of-synchronization status in downlink.

11. A base station apparatus for communicating with a mobile station, comprising:
a synchronization establishment determining unit configured to determine, at a start of communications, based on at least one of radio quality information in downlink and acknowledge information in response to a downlink signal, that synchronization with the mobile station in downlink is established.

12. A base station apparatus for communicating with a mobile station, comprising:
an RA response transmitting unit configured to transmit an RA response in a random access procedure;
a receiving unit configured to receive a UL-SCH corresponding to a UL Scheduling Grant included in the RA response; and
a synchronization status determining unit configured to determine a synchronization status in uplink or downlink; wherein
the synchronization status determining unit determines that synchronization in uplink or downlink is established when a decoding result of the UL-SCH is OK, and that synchronization in uplink or downlink is not established when a decoding result of the UL-SCH after HARQ retransmission is NG.

13. A transmission control method in a base station apparatus for communicating with a mobile station, comprising the steps of:
transmitting a downlink signal to the mobile station; and
determining out-of-synchronization with the mobile station in downlink based on information included in an uplink signal which is transmitted from the mobile station in response to the downlink signal.
